# EUROPEAN PATENT APPLICATION

(11) **EP 2 323 102 A1**
(43) Date of publication of application: **18.05.2011**
(21) Application number: 10188322.1
(22) Date of filing: 21.10.2010
(51) Int. Cl.: G06T 7/00, G03B 17/18

(54) **Image capturing aid**

(30) Priority: 23.10.2009 FR 0957464
(71) Applicant: ST-Ericsson (France) SAS, 38000 Grenoble (FR); ST-Ericsson SA, 1228 Plan-les-Ouates (CH)
(72) Inventor: Meunier, Laurent, 72190 Le Mans (FR)
(74) Representative: Cabinet Plasseraud

(57) **Abstract**

The invention proposes a method to assist with capturing images by means of an image capturing device comprising an image sensor, a preview screen, and a control unit. The method comprises the steps consisting of capturing, with the aid of the image sensor, at least a first image corresponding to the image of a desired scene; obtaining a second image (20); filtering the second image; displaying the filtered second image (22) superimposed on the first image on the preview screen; and allows adjusting the framing of the first image in reference to the second filtered image as they appear superimposed (32) on the preview screen.

## Description

### Technical Field

This invention relates to an image capturing aid and has particular applications in portable digital devices comprising a digital camera or digital video camera.

In particular, the invention relates to a method to assist with capturing images of a scene. In the present description, a scene comprises one or more people, a landscape, one or more objects, or a combination of these.

### Technological Background

Under certain circumstances, it is desirable to take several photos of the same landscape at different moments but with the same framing, or to take photos of different people with the same framing, for a portrait gallery for example, or to take the same object or different objects with the same framing, such as for advertising purposes. It may also be desirable to make photomontages of images of different scenes, or to introduce a child's face into a fanciful setting. All these examples place framing constraints on the image of the desired scene.

"Framing" is understood to mean the placement of the subject in the viewfinder of the device, meaning the choice of boundaries for the desired image and the choice of camera angle as a function of the subject and format used. Framing is achieved by adjusting both the position of the sensor plane and the focal length of the objective of the image capturing device. These adjustments concern the orientation and distance of the sensor plane relative to the desired scene (distance and angle of view) as well as the adjustment of the optical and/or digital zoom of the device (enlargement).

Currently, operations such as these are achieved by using a camera tripod or by using points of reference in a photography studio or outdoors.

Such operations are complicated to perform and yield a result which is often only approximate.

It is also possible to correct digital images by post-processing on a computer. However, the angle of view cannot be modified unless there are digital files of the scene in three dimensions. Obtaining and processing such files is costly. In general, this solution requires significant computational resources and is therefore quite expensive.

Photo booths, such as those known in France under the brand Photomaton®, have a screen with an oval drawn on it to allow a user to adjust the seat height so that his or her head appears in the approximate center of the photograph to be taken.

This image capturing aid, however, is exclusively intended and adapted for the taking of portraits by a photo booth. In addition, it serves only to center the head of the subject but does not ensure uniformity in photos from another point of view, as the heads may appear large or small depending on their respective sizes or whether the person is closer to or further away from the sensor plane of the device. In addition, these photo booths are not portable and are therefore not suitable for creating photographs of landscapes or objects or photomontages as described in the above examples.

There is therefore a need for a process to assist with capturing images of a scene, which allows capturing digital images in a simple manner with controlled framing, without requiring post-processing on a computer.

### Summary of the Invention

For this purpose, one object of the invention is a method to assist with capturing images by means of an image capturing device comprising an image sensor, a preview screen, and a control unit. The process comprises the following steps, implemented under the control of the control unit and consisting of:
- capturing with the aid of the image sensor at least a first image corresponding to the image of a desired scene;
- obtaining a second image;
- filtering the second image;
- displaying, on the preview screen, the filtered second image superimposed on the first image;
- allowing adjustment of the framing of the first image in reference to the filtered second image as they appear superimposed on the preview screen.

The filtered second image serves as a reference, meaning as a viewfinder aid, for framing the first image. This aids the user in framing the image corresponding to the desired scene.

One embodiment of the method additionally comprises the following steps, implemented under the control of the control unit and consisting of:
- comparing the first image to the filtered second image;
- determining the instructions for modifying the framing of the first image as a function of the result of the comparison, and,
- displaying graphical representations of the framing modification instructions.

These instructions provide the user with additional assistance in framing the image of the desired scene.

Another embodiment additionally comprises the following steps, implemented under the control of the control unit and consisting of:
- comparing the first image to the filtered second image;
- determining commands for modifying the framing of the first image as a function of the result of the comparison; and,
- applying the framing modification commands.

This embodiment provides an advantage in applications in which the image framing can be automatic.

The adjustment of the framing of the first image can comprise adjusting the distance and/or orientation of the sensor plane of the image sensor, and/or adjusting optical and/or digital parameters of the image capturing device.

One embodiment additionally comprises the following steps, implemented under the control of the control unit and consisting of:
- calculating a level of matching between the first image and the filtered second image as they appear superimposed on the preview screen; and,
- authorizing the capture of the image when the level of matching exceeds a given threshold.

In this embodiment, even the image capture is automatic, and can be done once the desired framing is achieved.

In one example, the filtering of the second image comprises the edge detection of at least one subject in the second image.

In another example, the filtering of the second image comprises adjusting the transparency of the second image so that it can be superimposed on the first image during the step of displaying it on the preview screen.

In both cases, the filtered reference image, meaning the filtered second image, can serve as an effective viewfinder aid without overly affecting the view of the image currently being acquired, meaning the first image.

It is possible for the second image to be obtained from a prior capture of the desired scene or of another scene associated with the desired scene, and/or by reading it from an appropriate storage medium. Thus the reference image may or may not have been taken by the user with the same device.

The method can additionally comprise a step of reducing the size of the first image and/or the second image before the processing by the control unit. Thus one can use a less powerful control unit in terms of computational power, and therefore a less expensive one, to process the images.

For the same reason, the method can additionally comprise a step of converting colors in the first image and/or the second image into gray scale, before the processing by the control unit.

Other objects of the invention are:
- a computer program comprising instructions for implementing the method to assist with capturing images, when the program is executed by a processor;
- an image capturing device comprising an image sensor, a preview screen, and a control unit, wherein the control unit is configured to implement all the steps of the method to assist with capturing images according to any of its embodiments as defined above; and
- a portable electronic device, such as a mobile telephone, comprising an image capturing device as defined above.

The above-mentioned computer program, image capturing device, and portable device present at least the same advantages as those obtained by the method to assist with capturing images.

### Brief Description of Data

The invention will be better understood by reading the following description, given only as an example and with reference to the appended drawings, in which:
- Figure 1 is a block diagram of the image capturing device;
- Figure 2 is a step diagram illustrating the steps of the method to assist with capturing images;
- Figure 3 is a block diagram illustrating the steps of the method to assist with capturing images;
- Figure 4 shows an example of a reference image, a reference image filtered by edge detection, and a superimposable image suitable for viewing on the screen of the image capturing device; and,
- Figure 5 is a schematic representation of a portable electronic device incorporating the image capturing device

### Detailed Description of Embodiments

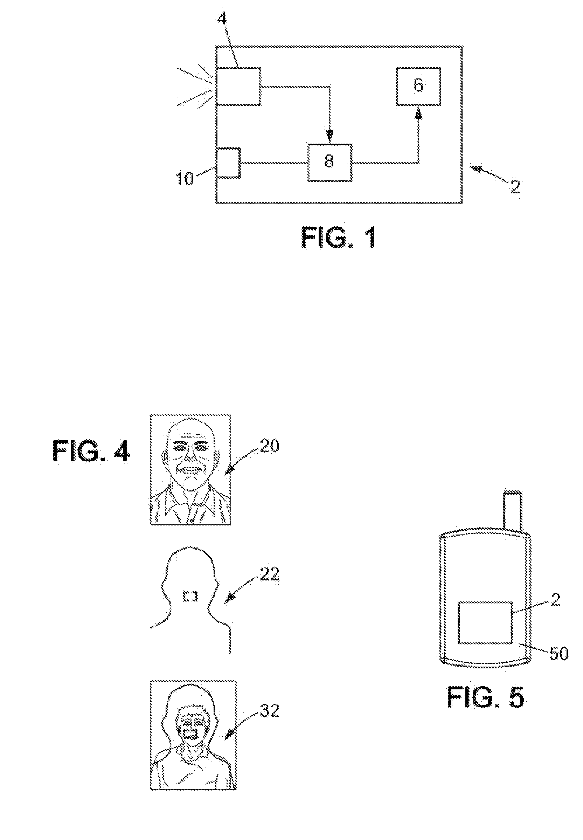

With reference to Figure 1, the image capturing aid device 2 of the invention comprises an image sensor 4 having a matrix of photosensitive cells suitable for capturing digital images. The device also comprises a screen 6 suitable for displaying images, particularly the image of a scene during the capture procedure ("preview" display mode). In particular, this screen is a screen for previewing images currently being acquired. The device also comprises a control unit 8, suitable for digitally processing the digital image data, reading and writing such data to an appropriate storage medium (memory), and controlling the image sensor 4 and the preview screen 6. The device can also comprise a connector 10 suitable for receiving data, particularly digital image data, from a storage device such as a memory card internal or external to the device, and/or an external source.

The photosensitive cells of the sensor 4 are, for example, charge coupled devices (CCD).

The screen 6 is, for example, a liquid crystal display (LCD) screen.

The control unit 8 is, for example, a microprocessor. It can also be part of a system on chip (SoC). It is coupled to the image sensor 4, the screen 6, and the connector 10, via at least one internal bus or by any other appropriate means.

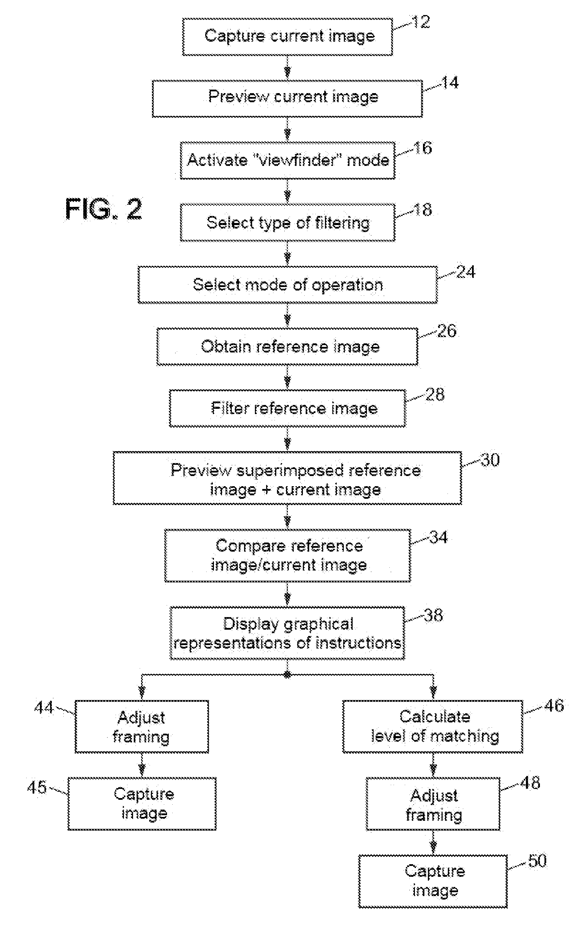

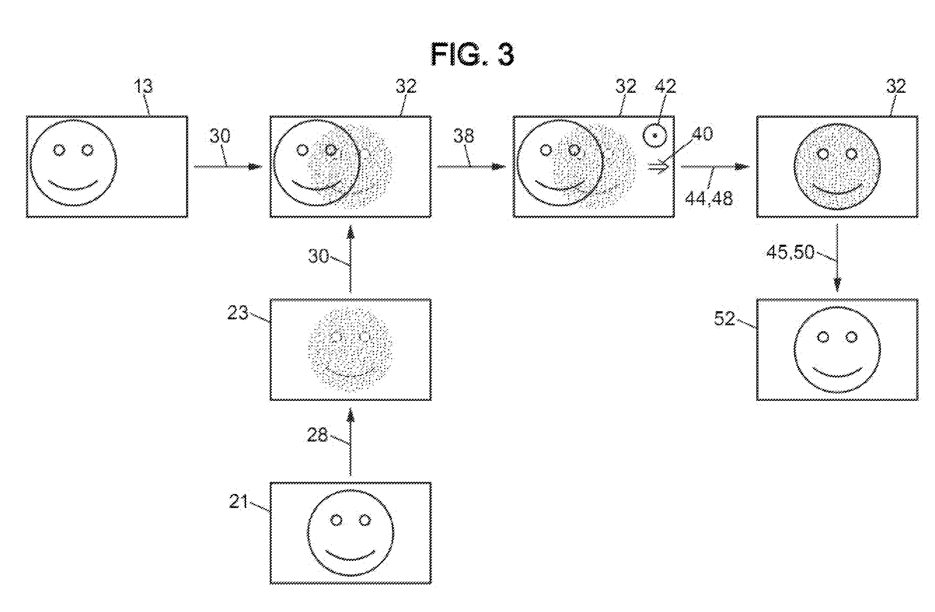

With reference to Figures 2 and 3, the image capture process of the invention begins with a step 12 for the capture of one or more images 13 currently being acquired, called "current images" in the following description, by the photosensitive cells of the sensor 4, and with a step 14 of previewing these current images 13 on the screen 6.

For simplification, we will only consider one current image 13 in the description and the figures. In practice, the sensor 4 can also capture a series of digital images forming a video. The process proceeds in the same manner, whether capturing a still image or a sequence of animated images forming a video.

During a step 16, a mode to assist with capturing images, called for example "viewfinder" mode or "view locator" mode, is activated by the user of the image capturing device 2.

During a step 18, the user selects a type of filtering, and possibly a filtering level, from among predefined filtering types and filtering levels executable by the control unit 8, to be applied to a reference image which is different from the current image.

Such filtering comprises, for example, edge detection filtering of a subject in the reference image (object, landscape, building, silhouette or face of a person, etc.), filtering by adjusting the transparency of the reference image, relief filtering, color conversion filtering, etc.

Edge detection filtering is known. Figure 4 shows an example of a digital image corresponding to the reference image 20, and a filtered image 22 obtained by filtering this same reference image with an edge detection filter.

Filtering by adjusting the transparency is also known. It generally consists of assigning a supplemental channel to the digital image, called the "alpha channel", which defines the degree of transparency of the image. This is a channel similar to the traditional channels defining the color components, encoded in a fixed number of bits per pixel (generally 8 or 16). It allows linearly adjusting the translucency of a pixel from complete opacity to complete transparency. In filtering which adjusts the transparency of an image, a predefined degree of transparency is assigned to all pixels of this image. For example, a degree of transparency of 128 is assigned for an 8-bit alpha channel in order to obtain a 50% transparency. Figure 3 illustrates an example of a reference image 21 and the image 23 corresponding to this same reference image with transparency filtering applied.

Again with reference to Figure 2, the user selects a mode of operation of the image capturing device during a step 24, for example from among an assisted mode of operation and a manual mode of operation.

During a step 26, the control unit 8 obtains a reference image 20, 21.

This step can be realized by a prior capture by the sensor 4 of the desired scene or of another scene to be associated with it. "Scene associated with the desired scene" is understood to mean a scene corresponding, for example, to the portrait of a person realized in a manner that gives a representation of the subject under conditions that are to be recreated in the current image. A scene associated with the desired scene can also be a scene whose image is to be supplemented with the image of the desired scene in order to create a photomontage.

The step 26 can also be carried out by importing a previously captured digital image, which is provided to the control unit 8 from outside the device via the connector 10. In a variation, the reference image can be obtained from memory internal to the device, which stores digital images in the appropriate format.

In the first of the above cases, in which a previously captured image of the desired scene or of an associated scene is used, step 26 is of course performed before steps 12 and 14.

During a step 28, the reference image 20, 21 illustrated in Figures 3 and 4 is filtered with the filtering selected in step 18, to obtain a filtered reference image 22,23.

During a step 30, a combined image 32 is displayed on the screen 6, or rather superimposed images resulting from superimposing the filtered reference image 22, 23 onto the current image 13 which has been captured by the sensor 4.

Superimposing onto the current image 13 a reference image 22 filtered by edge detection is done, for example, by displaying in a predefined color the pixels representative of edges in the filtered reference image 22 and pixels of the current image 13 not situated along these edges.

Superimposing onto the current image 13 a reference image 23 filtered by adjusting the transparency is done, for example, by alpha blending. The pixel color resulting from the alpha blending is a combination of the color of the current image 13 and the color of the filtered reference image 23. The coefficient α generally has a value of between 0 and 1. The superimposed image 32 can, for example, be calculated in the following manner: pixel of the superimposed image = α x {color of a pixel in the current image} + (1- α) x {color of a pixel in the filtered reference image at the same location as the pixel in the current image}.

During a step 34, the current image 13 is compared to the filtered reference image 22, 23, by the control unit 8. The unit determines the adjustments or modifications to be made to the position (distance) and orientation (in three-dimensional space) of the sensor plane of the image sensor 4, to adjust the framing of the current image. Additionally or alternatively, the framing adjustment instructions determined in this manner can also concern optical and/or digital parameters of the image capturing device 2, particularly the zoom (enlargement) and/or light sensitivity. The purpose of these modifications is to match the current image 13 to the reference image 20, 21, in the sense that they will have the same framing, for example for a portrait gallery, or will complement each other, for example in a photomontage.

During a step 38, the control unit 8 generates graphical representations representative of instructions for adjusting the position and orientation of the sensor plane of the sensor 4 and the optical and/or digital parameters of the image capturing device 2. These graphical representations are meant for the user, to indicate to the user what needs to be done to the image capturing device 2 so that the current image 13, for example, more closely matches the framing of the reference image 20, 21 (for a portrait gallery), or complements it (for a photomontage). These adjustments comprise, for example, an indication of the need to zoom in, to change the viewing angle, to shift the image capturing device forward or back, or to use a flash.

For example, with reference to Figure 3, the graphical representation 40 illustrates that the user needs to aim the image capturing device 2 more to the right. The graphical representation 42 indicates that he needs to zoom in.

The graphical representations representative of framing adjustment instructions can be displayed on the preview screen 6, for example in the form of on-screen display (OSD) symbols, or by any other means and in particular via a specific display device.

In a variation, the process may not comprise the steps 34 and 38, which are not mandatory.

When the user has selected the manual mode in step 24, the step 38 is followed by a step 44 in which it is the user who adjusts the position and orientation of the sensor plane of the sensor 4 and the optical parameters of the image capturing device 2. To perform this adjustment, the user is assisted by the viewfinder aid consisting of the filtered reference image 22, 23 superimposed on the current image. In other words, the user makes these adjustments in reference to the image 22, 23. If applicable, he is also aided by graphical representations of instructions as presented above.

Then during the step 45, the user can initiate the capture of images when he judges there is sufficient correspondence, between the filtered reference image 22, 23 and the current image 13, in the desired conditions for matching the image of the desired scene to the reference image.

When the user has selected the assisted mode in step 24, the step 38 is followed by the step 46 which will now be presented.

During this step 46, a level of matching between the current image 13 and the filtered reference image 22, 23 is calculated by the control unit 8.

This step 46 is, for example, realized by applying an edge detection filter to the reference image 20 and to the current image 13 in order to obtain two digital images with two colors, for example black and white. These two digital images are compared pixel by pixel (or block of pixels by block of pixels). When two pixels (or blocks of pixels) located at the same position, one in the filtered reference image 22 and the other in the filtered current image 13, have the same color (or the same average color for all pixels in the block), a counter is incremented. If they do not, the counter is not incremented. The value of the counter obtained after comparison of all pixels (or all blocks of pixels) in the two images is compared to a predefined threshold.

When this value does not exceed a predefined threshold, the control unit 8, during a step 48, modifies the framing to increase the degree of the matching between the current image 13 and the reference image 20, 21. When this value exceeds the predefined threshold, the image capturing device 2 authorizes the capture of the digital image 52. The image capture, done during a step 50, can be automatic.

In this assisted mode of operation of the image capturing device 2, the position, orientation, and angle of the image capturing device 2 can be modified if the device is fixed to a support (for example a platform on a tripod or a similar arrangement) which can be moved by motors, similarly to a remote-controlled surveillance camera, for example.

In a variation, the comparison step 34 and the matching level calculation step 46 are done by searching for areas of identical or similar color and by incrementing a counter for all pixels positioned at the same location and having approximately the same color.

The comparison step 34 and the matching level calculation step 46 between the current image and the reference image can be preceded by steps in which the image sizes are decreased by digital processing, in order to increase the speed of the computations performed by the control unit 8. This also applies more generally for any image processing performed by the control unit. In other words, the size of the current image being acquired and/or that of the reference image can be reduced before processing by the control unit, and in particular before the processing corresponding to filtering the reference image. The reduction in image size is obtained by any appropriate image compression technique known to a person skilled in the art, such as, for example, averaging pixel values by pixel blocks.

Alternatively or additionally, the processing of the current image and/or the reference image by the control unit, and in particular the processing for these steps 34 and 46, can be preceded by an elimination of the color in the images, for example via conversion of the image colormap to gray scale.

These two variations increase the computational speed, or, as a corollary, decrease the costs of the image capturing device by providing a less powerful control unit.

To summarize, the description given above with reference to the drawings, details different embodiments of a process to assist with capturing images and of an image capturing device.

Another aspect of the invention relates to a computer program comprising instructions for implementing a process as described above when the program is executed by a processor.

Another object of the invention is a portable digital device, for example a mobile telephone 50 as represented in Figure 5, comprising an image capturing device 2 as described above. It can also be any other communicating mobile terminal, a hand-held computer, a personal digital assistant (PDA), a digital camera or digital video camera, etc.

Advantageously, the installation in an existing device of an image capturing device as described above does not require modifying the hardware platform of the existing device. Simply upgrading the software is sufficient.

The invention has been described and illustrated in the present detailed description and in the Figures. The invention is not limited to the embodiments presented. Other variations and embodiments can be deduced and implemented by a person skilled in the art upon reading the present description and the attached drawings.

In the claims, the term "comprise" does not exclude other elements or other steps. The indefinite article "a" does not exclude the plural. A single processor or several other units can be used to implement the invention. The different characteristics presented and/or claimed can advantageously be combined. Their presence in the description or in the various dependent claims does not exclude this possibility. The reference labels are not to be taken as limiting the scope of the invention.

## Claims

1. Method to assist with capturing images by means of an image capturing device (2) comprising an image sensor (4), a preview screen (6), and a control unit (8), said method comprising the following steps implemented under the control of the control unit and consisting of:
- capturing with the aid of the image sensor (12) at least one first image (13) corresponding to the image of a desired scene;
- obtaining (26) a second image (20, 21);
- filtering (28) the second image (20, 21);
- displaying (30), on the preview screen, the filtered second image (22, 23) superimposed on the first image;
- allowing (44, 48) adjustment of the framing of the first image in reference to the filtered second image as they appear superimposed on the preview screen.

2. Method according to claim 1, additionally comprising the following steps implemented under the control of the control unit and consisting of:
- comparing (34) the first image to the filtered second image;
- determining (34) instructions for modifying the framing of the first image as a function of the result of the comparison; and,
- displaying (38) graphical representations (40, 42) of the framing modification instructions.

3. Method according to either of claims 1 or 2, additionally comprising the following steps implemented under the control of the control unit and consisting of:
- comparing (34) the first image to the filtered second image;
- determining (34) commands for modifying the framing of the first image as a function of the result of the comparison; and,
- applying the framing modification commands.

4. Method according to any one of the above claims, wherein the adjustment of the framing of the first image comprises adjusting the distance and/or the orientation of the sensor plane of the image sensor, and/or adjusting optical and/or digital parameters of the image capturing device.

5. Method according to any of the above claims, additionally comprising the following steps implemented under the control of the control unit and consisting of:
- calculating (46) a level of matching between the first image and the filtered second image as they appear superimposed on the preview screen; and,
- authorizing the capture (45, 50) of the desired scene when the level of matching exceeds a given threshold.

6. Method according to any one of the above claims, wherein the filtering (28) of the second image comprises the edge detection of at least one subject in the second image.

7. Method according to any one of claims 1 to 5, wherein the filtering (28) of the second image comprises adjusting the transparency of said second image so it can be superimposed on the first image during the step of displaying it on the preview screen.

8. Method according to any one of claims 1 to 7, wherein the second image is obtained from a prior capture of the desired scene or of another scene associated with the desired scene, and/or by reading it from an appropriate storage medium.

9. Method according to any one of the above claims, additionally comprising a step of reducing the size of the first image and/or the second image before the processing by the control unit.

10. Method according to any one of the above claims, additionally comprising a step of converting colors in the first image and/or second image into gray scale, before the processing by the control unit.

11. Computer program comprising instructions for implementing all the steps of the method to assist with capturing images according to any one of claims 1 to 10, when the program is executed by a processor.

12. Image capturing device (2) comprising an image sensor (4), a preview screen (6), and a control unit (8), wherein the control unit is configured to implement all the steps of a method according to any one of claims 1 to 10.

13. Portable electronic device comprising an image capturing device according to claim 12.
